# EUROPÄISCHE PATENTSCHRIFT

(11) **EP 3 652 848 B1**
(45) Veröffentlichungstag und Bekanntmachung des Hinweises auf die Patenterteilung: **02.06.2021**
(21) Anmeldenummer: 18768774.4
(22) Anmeldetag: 22.08.2018
(51) Int. Cl.: H02M 3/337, H02M 1/00

(54) **RESONANTER GLEICHSTROMSTELLER**
RESONANT DIRECT CURRENT ADJUSTER
HACHEUR RÉSONANT

(30) Priorität: 29.09.2017 EP 17193977
(43) Veröffentlichungstag der Anmeldung: 20.05.2020
(73) Patentinhaber: Siemens Aktiengesellschaft, 80333 München (DE)
(72) Erfinder: HERGT, Martin, 90411 Nürnberg (DE); LUTZE, Marcel, 90459 Nürnberg (DE); NIELEBOCK, Sebastian, 91301 Forchheim (DE); PFEIFER, Markus, 90455 Nürnberg (DE); ZOCHER, Markus, 91639 Wolframs-Eschenbach (DE)
(86) Internationale Anmeldenummer: PCT/EP2018/072642
(87) Internationale Veröffentlichungsnummer: WO 2019/063211

(56) Entgegenhaltungen:
- US-A1- 2002 064 057
- US-A1- 2014 153 290
- US-A1- 2015 229 216
- US-A1- 2017 027 027

## Beschreibung

Die Erfindung betrifft einen resonanten Gleichstromsteller mit einer Wechselrichtschaltung, einer Gleichrichtschaltung und einer Transformatoreinheit, wobei die Wechselrichtschaltung mit einem ersten Anschluss der Transformatoreinheit verbunden ist und die Gleichrichtschaltung mit einem zweiten Anschluss der Transformatoreinheit verbunden ist.

Gleichstromsteller werden verwendet, um die Spannungshöhe eine Gleichspannung zu verändern. Diese werden auch als Gleichstromwandler oder DC/DC Steller bzw. DC/DC Wandler bezeichnet. Mit Hilfe von Halbleitern wird die Spannung an der Eingangsseite des Gleichstromstellers in eine vorgebbare Spannung an der Ausgangsseite des Gleichstromstellers umgewandelt. Um die Schaltverluste in den Halbleitern des Gleichstromstellers zu reduzieren werden bei resonanten Gleichstromstellern Wechselströme erzeugt, bei denen Schalthandlungen in oder nahe den Nulldurchgängen der Ströme vorgenommen werden. Oftmals sind Ein- und Ausgang von Gleichstromstellern galvanisch voneinander getrennt.

Die resonanten Wandler weisen ihre Vorteile im Bereich nahe der Resonanzfrequenz auf, dort sind die Ein- oder Ausschaltverluste der Halbleiter am geringsten. Wird der Abstand zwischen den Frequenzen des Arbeitspunktes und der Resonanz erhöht, nehmen kontinuierlich die Schaltverluste zu. Neben der Erhöhung der Ein- oder Ausschaltverluste verliert der Strom auch im resonanten Netzwerk seinen sinusförmigen Verlauf und weist somit ein breitbandiges Spektrum im Frequenzbereich auf, das am Ausgang des resonanten Wandlers eine aufwendige Filterung erfordert. Bedingt durch die geringen Ein- und Ausschaltverluste besitzt der resonante Wandler auch seinen besten Wirkungsgrad nahe oder direkt auf der Resonanzfrequenz, im andern Fall weist der resonante Wandler ähnliche Wirkungsgrade wie eine herkömmlich hartschaltende Topologie auf. Resonante Wandler, die einen großen Ein- und Ausgangsspannungsbereich abdecken sollen, werden meist über einen weiten Frequenzbereich betrieben, was zu den oben dargestellten Nachteilen führt. Im Extremfall wird der resonante Wandler im rein kapazitiven oder induktiven Bereich betrieben.

Derzeit werden Gleichstromsteller über einen großen Dynamikbereich der Ein- und Ausgangsspannungen mit konventionell hartschaltenden Topologien benutzt. Resonante Strukturen kommen meist nur bei konstanten Lasten bzw. geringen Lastschwankungen zum Einsatz. Dort können sie direkt oder nahe bei ihrer Resonanzfrequenz betrieben werden und weisen die oben genannten Vorteile auf.

Für einen großen Ein- und Ausgangsspannungsbereich kommen nach dem heutigen Stand der Technik hartschaltende Vollbrücken zum Einsatz. Die Funktionsweise der Schaltung ist wie folgt. Die eingangsseitige Wechselrichtschaltung stellt eine Wechselspannung für den Transformator bereit. Diese wird durch das wechselseitige Einschalten der Halbleiter der Wechselrichtschaltung erzeugt. Um die Spannungs-Zeit-Fläche und damit den Leistungsfluss zu steuern, wird eine Einschaltdauer zwischen 0% und 50% eingestellt. Die so erzeugte Primärspannung des Transformators wird je nach Übersetzungsverhältnis auf die Sekundärseite übertragen und mit Hilfe der Gleichrichtschaltung gleichgerichtet, siehe zum Beispiel US 2015-229216 A1 und DE 10 2014 206 008 A1.

Bei dieser Topologie sind deutlich die Schaltverluste der Halbleiter zu beobachten. Zudem ist der Strom im Querzweig der Vollbrückenschaltung im Frequenzbereich sehr breitbandig und benötigt zur Glättung ein großes Ausgangsfilter. Der Vorteil dieser Anordnung liegt jedoch im großen Einstellbereich der Ein- und Ausgangsspannungen.

Bei einer resonant schaltende Wechselrichtschaltung eines Gleichstromstellers wird ein sinusförmiger Strom erzeugt, der durch den Transformator fließt und somit durch den wiederkehrenden Nulldurchgang stromlos ein- und ausgeschaltet werden kann. Der Resonanzkreis, der den sinusförmigen Strom erzeugt, ist eine Reihenschaltung einer Kapazität und einer Induktivität im Brückenzweig der Wechselrichtschaltung. Durch das Schalten der Halbleiter der Wechselrichtschaltung entsteht ein sinusförmiger Strom, der über den Transformator übertragen und auf der Sekundärseite mittels der Gleichrichtschaltung gleichgerichtet wird. Ein Kondensator am Ausgang der Gleichrichtschaltung dient zur Glättung der gleichgerichteten Spannung. Die Ansteuerung der Schalter kann geringfügig unterresonant (fₛ<fᵣ), resonant (fₛ=fᵣ) oder geringfügig überresonant (fₛ>fᵣ) erfolgen, je nachdem wie hoch die Frequenz ist, in der die Wechselrichtschaltung betrieben wird. Somit ist der resonante Betrieb gewährleistet mit einem durchgängig sinusförmigen Strom. Sollte sich die Schaltfrequenz weit unter- oder oberhalb der Resonanz befinden, wird der Stromverlauf nicht sinusförmig. Daher ist es erforderlich, dass die resonant schaltende Wechselrichtschaltung stets im Bereich der Resonanzfrequenz zu betreiben ist, um aufwendige und verlustbehaftete Filter im Brückenzweig zu vermeiden.

Der Erfindung liegt die Aufgabe zugrunde, einen resonanten Gleichstromsteller zu verbessern.

Diese Aufgabe wird durch einen resonanten Gleichstromsteller mit einer Wechselrichtschaltung, einer Gleichrichtschaltung und einer Transformatoreinheit gemäß Anspruch 1 gelöst.

Weitere vorteilhafte Ausgestaltungen der Erfindung sind in den abhängigen Ansprüchen angegeben.

Der Erfindung liegt die Erkenntnis zugrunde, dass sich durch ein variables Übersetzungsverhältnis der Transformatoreinheit das Verlustverhalten des Gleichstromstellers deutlich verbessern lässt. Ein variables Übersetzungsverhältnis bedeutet dabei, dass das Verhältnis von Ausgangsspannung zu Eingangsspannung der Transformatoreinheit veränderlich ist. Dies kann beispielsweise durch ein veränderliches Übersetzungsverhältnis des ersten Transformators erreicht werden. Dafür kann der erste Transformator mit einem Stufenschalter ausgeführt sein.

Ergänzend ist es möglich, auf die Ausgangsspannung des ersten Transformators, das heißt auf die Spannung der Sekundärseite des ersten Transformators, eine weitere Spannung hinzuzuaddieren. Dies kann beispielsweise durch eine Reihenschaltung der Sekundärseite des Transformatorausgangs mit der Spannung eines Energieübertragungspfades vorgenommen werden. Dabei ist es besonders vorteilhaft, wenn die hinzuaddierte Spannung variabel ist. Diese Spannung lässt sich beispielsweise mit Hilfe eines Wechselrichters variabel erzeugen. Durch einen in dem Energieübertragungspfad vorhandenen zweiten Transformator ist der Ausgang des Energieübertragungspfades darüber hinaus potentialfrei, so dass diese Spannung sich problemlos zu der Ausgangsspannung des ersten Transformators hinzuaddiert werden kann, wenn die Sekundärseite des ersten Transformators und der Ausgang des Energieübertragungspfades in einer Reihenschaltung angeordnet sind.

Besonders vorteilhaft ist es dabei, wenn der Wechselrichter mit der Primärseite des ersten Transformators verbunden ist, da dann für den Wechselrichter hinsichtlich der erforderlichen Sperrspannungen die gleichen Halbleiter verwendet werden können wie sie auch in der Wechselrichtschaltung vorhanden sind. Somit können auf einfache Weise mit vergleichbaren oder sogar gleichen Halbleitern Wechselrichter und Wechselrichtschaltung aufgebaut werden.

Es hat sich dabei gezeigt, dass eine besonders gute Reduktion der Verluste des Gleichstromstellers dann erreichbar wird, wenn 75% der durch den Gleichstromsteller zu übertragenden Leistung über den ersten Transformator und 25% der durch den Gleichstromsteller zu übertragenden Leistung über den Energieübertragungspfad übertragen wird. Damit besitzt der erste Transformator dann die dreifache Leistungsfähigkeit im Vergleich mit dem zweiten Transformator.

Durch das variable Übersetzungsverhältnis der Transformatoreinheit ist es möglich, den Dynamikbereich des resonanten Gleichstromstellers über einen großen Ein- und Ausgangsspannungsbereich mit Hilfe eines Stellgliedes, das sich direkt im ersten Transformator oder parallel dazu befindet, zu erhöhen. Dieses Stellglied kann beispielsweise wie oben beschrieben durch einen Stufenschalter im ersten Transformator oder durch einen Wechselrichter in dem Energieversorgungspfad parallel zum ersten Transformator, bei dem die Ausgangsspannung des Energieversorgungspfades durch eine Reihenschaltung zur Spannung der Sekundärseite des ersten Transformators hinzugefügt wird, erreicht werden. Darüber hinaus kann dieses Stellglied die Arbeitspunkte, die sich aufgrund der Ein- und Ausgangsspannung weiter weg von der Resonanz befinden, durch eine variable Spannungsverstärkung näher an die Resonanz heranführen. Somit werden die Verluste in den Halbleitern der Wechselrichtschaltung aufgrund des geringeren Abstandes zur Resonanzfrequenz reduziert und der Wirkungsgrad des resonanten Wandlers gegenüber konventionellen Wandler-Topologien erhöht. Das Stellglied kann alternativ zu den oben bereits aufgezählten Realisierungen auch durch eine Vervielfacherschaltung, die sich parallel zum Transformator befindet, realisiert werden. Je nach Anzahl der einzelnen Stufen können diese individuell zu- oder abgeschaltet werden.

Die Wirkung des variablen Übersetzungsverhältnisses liegt darin, dass die resonant schaltende Wechselrichtschaltung durch diese Topologie für einen großen Ein- und Ausgangsspannungsbereich mit einem hohen Wirkungsgrad ausgelegt werden kann. Dies bedeutet, dass sämtliche Arbeitspunkte nahe der Resonanzfrequenz liegen, um einen sinusförmigen Stromverlauf zu erhalten. Um das Übersetzungsverhältnis zu verändern ist es nicht mehr erforderlich die Frequenz der Wechselrichtschaltung zu beeinflussen, sondern man hat mit dem variablen Übersetzungsverhältnis der Transformatoreinheit die Möglichkeit, die Spannung am Ausgang der Gleichrichtschaltung auch ohne Änderung der Frequenz zu beeinflussen. Die resonante Brückenschaltung soll dabei einen großen Dynamikbereich bei verschiedenen Eingangsspannungen und konstanter Ausgangspannung aufweisen. Dazu werden die größeren Abschaltverluste bei Frequenzen, die weiter von der Resonanzfrequenz entfernt sind vermieden, indem Arbeitspunkte in der Nähe der Resonanzfrequenz bei geringerem Übersetzungsverhältnis gewählt werden. Durch das variable Übersetzungsverhältnis ist es möglich, für einen breiten Leistungsbereich, die Schaltfrequenz nahe der Resonanzfrequenz wählen. Dadurch kann das Auftreten größerer Abschaltverluste im Halbleiterschalter beim Arbeitspunkt vermieden werden, da der Arbeitspunkt nicht mehr so weit entfernt von der Resonanzfrequenz gewählt werden muss. Dadurch wird das Betriebsverhalten verbessert und die Abschaltverluste des Halbleiterschalters sind durch die Nähe zur Resonanzfrequenz sehr gering.

Die Vorteile des resonanten Gleichstromstellers liegen zum einen in den äußerst geringen Ein- und Ausschaltverluste der Halbleiter in der Wechselrichtschaltung und den damit verbundenen hohen Wirkungsgrad des Gleichstromstellers über einen großen Arbeitsbereich hinweg. Darüber hinaus entfällt durch diese neuartige Topologie aus einem zusätzlichen Stellglied im Brückenzweig der Einsatz eines Filters, da durch den Betrieb mit variablem Übersetzungsverhältnis der Sinusverlauf im Brückenzweig erzeugbar ist und das Auftreten unerwünschter Harmonischer vermieden wird.

Im Folgenden soll die Erfindung anhand der in den Figuren dargestellten Ausführungsbeispielen näher beschrieben und erläutert werden. Es zeigen:
- FIG 1: einen resonanten Gleichstromsteller mit einem Transformator mit Stufenschalter gemäß dem Stand der Technik,
- FIG 2: Frequenzgang des resonanten Gleichstromstellers und
- FIG 3: einen resonanten Gleichstromsteller mit Energieübertragungspfad gemäß einer Ausführung der Erfindung.

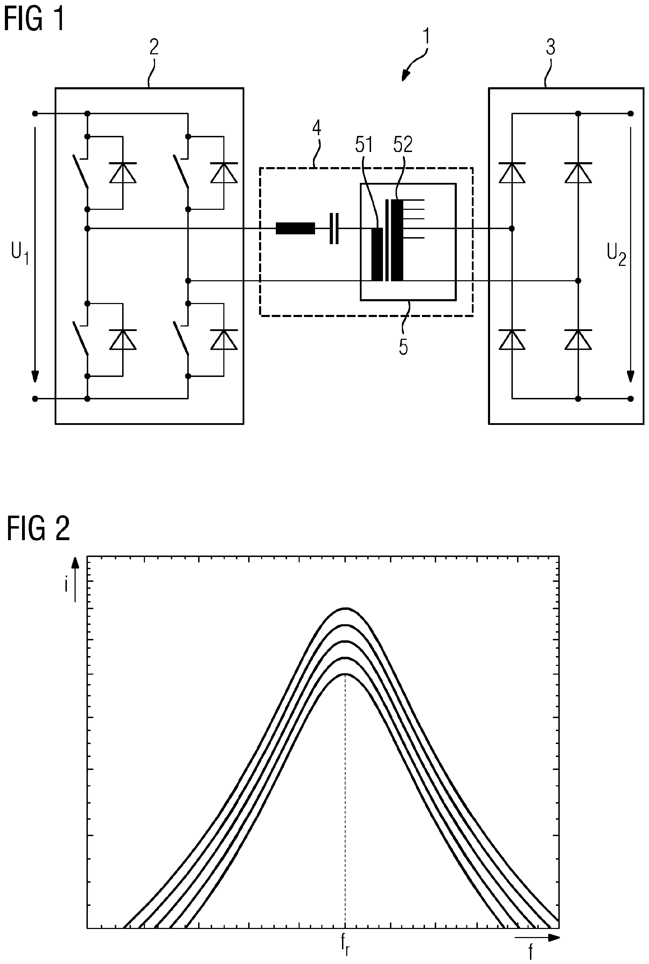

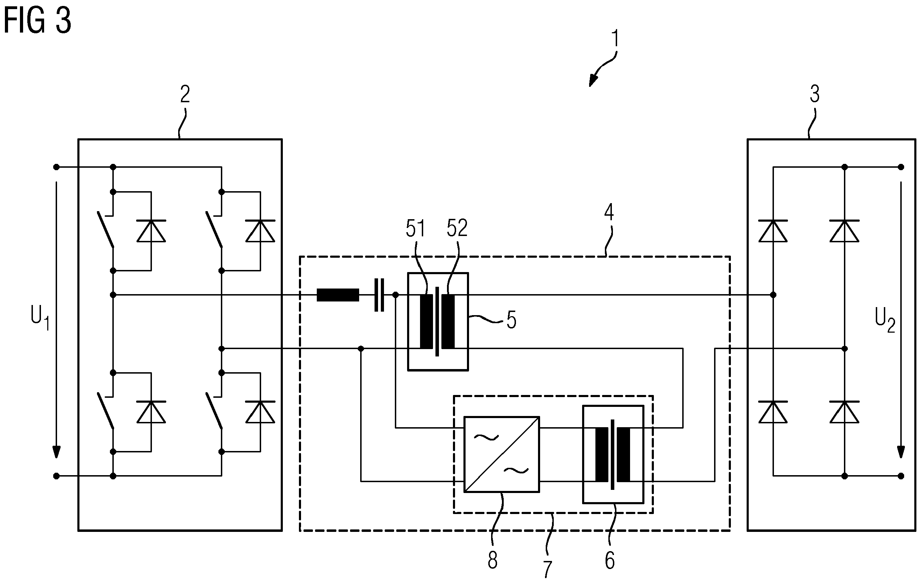

Die FIG 1 zeigt ein Ausführungsbeispiel für einen resonanten Gleichstromsteller 1 mit einem ersten Transformator 5 mit einem Stufenschalter, der unter Last geschaltet werden kann. Der Gleichstromsteller 1 kann eine Eingangsspannung U₁ in eine Ausgangsspannung U₂ umformen. Dazu wird in der Wechselrichtschaltung 2 eine Wechselspannung erzeugt. Mit dieser kann elektrische Energie mit Hilfe der Transformatoreinheit 4 von der Wechselrichtschaltung 2 an eine Gleichrichtschaltung 3 übertragen werden. Dazu sind jeweils Wechselrichtschaltung 2 und Gleichrichtschaltung 3 mit der Transformatoreinheit 4 verbunden. Dabei umfasst die Transformatoreinheit Mittel zur Veränderung des Übersetzungsverhältnisses i der Transformatoreinheit 4. Dieses Mittel zur Veränderung des Übersetzungsverhältnisses i kann in einer einfachen Ausführung ein Stufenschalter in dem ersten Transformator 5 sein. Bedingt durch den Stufenschalter kann die Verstärkung der Transformatoreinheit 4 individuell auf den einzelnen Arbeitspunkt mit einem besonders hohen Wirkungsgrad nahe der Resonanzfrequenz gelegt werden. Das Wicklungsverhältnis und die Anzahl der Stufen des Stufenschalters sind in vorteilhafter Weise auf die jeweilige Anwendung auszulegen. Die FIG 2 zeigt das Übersetzungsverhältnis i der Transformatoreinheit 4 in Abhängigkeit von der Frequenz der erzeugten Wechselspannung. Die unterschiedlichen Linien geben unterschiedliche Stellungen des Stufenschalters bzw. unterschiedliche an der Sekundärseite des ersten Transformators mittels einer Reihenschaltung hinzugefügten Spannungen wieder. Es wird deutlich, dass eine Veränderung des Übersetzungsverhältnisses nun nicht mehr nur durch Variation der Frequenz, sondern auch durch Veränderung der Position des Stufenschalters erreicht werden kann. Alternativ kann an der Sekundärseite des ersten Transformators eine Spannung hinzuaddiert werden, die das Übersetzungsverhältnis i der Transformatoreinheit beeinflusst. Dabei zeigt FIG 2 deutlich, dass die Spannungsverstärkung über den Stufenschalter vorgebbar ist. Somit ist es möglich, den Arbeitspunkt über einen großen Dynamikbereich nahe der Resonanz mit einem besonders hohen Wirkungsgrad nachzufahren. Dabei ist zu beachten, dass die Anzahl der Stufen und der Stellbereich jeweils für die entsprechende Applikation auszulegen sind. Technisch lässt sich die Variation der Spannungsverstärkung auch mit einem Wechselrichter realisieren, wie er in FIG 3 dargestellt ist. Zur Vermeidung von Wiederholungen wird auf die Beschreibung zur FIG 1 sowie auf die dort eingeführten Bezugszeichen verwiesen. Der Wechselrichter 8 ist in einem Energieübertragungspfad 7 parallel zum ersten Transformator angeordnet. Dabei entnimmt der Energieübertragungspfad 7 Energie aus der Wechselrichtschaltung 2 auf, indem der Energieübertragungspfad parallel zur Primärwicklung 51 des ersten Transformators 5 angeordnet ist. Um die Spannung am Ausgang der Transformatoreinheit 4 beeinflussen zu können ist der Ausgang des Energieübertragungspfades 7 in Reihe mit der Sekundärwicklung 52 des ersten Transformators angeordnet. Die Reihenschaltung bildet gleichzeitig den Ausgang der Transformatoreinheit 4. Zur galvanischen Trennung von Ein- und Ausgang des Gleichstromstellers 1 ist vorteilhafterweise im Energieübertragungspfad 7 ein zweiter Transformator 6 angeordnet. Mit dieser Schaltung lässt sich ein Übertragungsverhalten wie in FIG 2 erzeugen, wobei die Kurvenscharen dann beliebig viele Kurven aufweisen können, da der Wechselrichter nahezu beliebige Spannungen erzeigen kann.

## Patentansprüche

1. Resonanter Gleichstromsteller (1), aufweisend
- eine Wechselrichtschaltung (2),
- eine Gleichrichtschaltung (3) und
- eine Transformatoreinheit (4),
wobei die Wechselrichtschaltung (2) mit einem ersten Anschluss der Transformatoreinheit (4) verbunden ist und die Gleichrichtschaltung (3) mit einem zweiten Anschluss der Transformatoreinheit (4) verbunden ist, wobei der erste und der zweite Anschluss mittels eines ersten Transformators (5) galvanisch voneinander getrennt sind, wobei die Transformatoreinheit (4) zwischen dem ersten Anschluss der Transformatoreinheit (4) und dem ersten Transformator (5) eine Reihenschaltung einer Kapazität und einer Induktivität aufweist, wobei die Transformatoreinheit (4) Mittel zur Anpassung des Übersetzungsverhältnisses der Transformatoreinheit (4) aufweist, die derart ausgebildet sind, dass die Transformatoreinheit (4) einen Energieübertragungspfad (7) aufweist, wobei der Energieübertragungspfad (7) einen Wechselrichter (8) und einen zweiten Transformator (6) aufweist, wobei der Wechselrichter (8) parallel zur Primärwicklung (51) des ersten Transformators (5) zwischen der Reihenschaltung und dem ersten Transformator (5) angeordnet ist und eine Wicklung des zweiten Transformators (6) derart in Reihe zur Sekundärwicklung (52) des ersten Transformators (5) angeordnet ist, dass sich die Ausgangsspannungen des ersten Transformators (5) und des zweiten Transformators (6) addieren.

2. Resonanter Gleichstromsteller (1) nach Anspruch 1, wobei der erste Transformator (5) einen Stufenschalter aufweist.

3. Resonanter Gleichstromsteller (1) nach einem der Ansprüche 1 oder 2, wobei der erste Transformator (5) im Vergleich zum zweiten Transformator (6) die dreifache Leistungsfähigkeit aufweist.

## Claims

1. Resonant DC chopper (1), having
- an inverter circuit (2),
- a rectifier circuit (3) and
- a transformer unit (4),
wherein the inverter circuit (2) is connected to a first terminal of the transformer unit (4) and the rectifier circuit (3) is connected to a second terminal of the transformer unit (4), wherein the first and the second terminal are galvanically isolated from one another by means of a first transformer (5), wherein the transformer unit (4) has a series connection of a capacitance and an inductance between the first terminal of the transformer unit (4) and the first transformer (5), wherein the transformer unit (4) has means for adapting the transformation ratio of the transformer unit (4), which are embodied such that the transformer unit (4) has an energy transfer path (7), wherein the energy transfer path (7) has an inverter (8) and a second transformer (6), wherein the inverter (8) is arranged in parallel with the primary winding (51) of the first transformer (5) between the series connection and the first transformer (5) and a winding of the second transformer (6) is arranged in series with the secondary winding (52) of the first transformer (5) such that the output voltages of the first transformer (5) and the second transformer (6) are added.

2. Resonant DC chopper (1) according to claim 1, wherein the first transformer (5) has a tap changer.

3. Resonant DC chopper (1) according to one of claims 1 or 2, wherein the first transformer (5) has three times the performance compared to the second transformer (6).

## Revendications

1. Hacheur (1) résonnant, comportant
- un circuit (2) onduleur,
- un circuit (3) redresseur et
- une unité (4) de transformateur,
dans lequel le circuit (2) onduleur est connecté à une première borne de l'unité (4) de transformateur et le circuit (3) redresseur est connecté à une deuxième borne de l'unité (4) de transformateur, dans lequel la première et la deuxième borne sont séparées galvaniquement l'une de l'autre au moyen d'un premier transformateur (5), dans lequel l'unité (4) de transformateur a, entre la première borne de l'unité (4) de transformateur et le premier transformateur (5), un circuit série d'une capacité et d'une inductance, dans lequel l'unité (4) de transformateur a des moyens d'adaptation du rapport de transformation de l'unité (4) de transformateur, qui sont constitués de manière à ce que l'unité (4) de transformateur ait un trajet (7) de transmission d'énergie, dans lequel le trajet (7) de transmission d'énergie a un onduleur (8) et un deuxième transformateur (6), dans lequel l'onduleur (8) est monté en parallèle à l'enroulement (51) primaire du premier transformateur (5) entre le circuit série et le premier transformateur (5) et un enroulement du deuxième transformateur (6) est monté en série avec l'enroulement (52) secondaire du premier transformateur (5), de manière à ce que les tensions de sortie du premier transformateur (5) et du deuxième transformateur (6) s'additionnent.

2. Hacheur (1) résonnant suivant la revendication 1, dans lequel le premier transformateur (5) a un commutateur à gradins.

3. Hacheur (1) résonnant suivant l'une des revendications 1 ou 2, dans lequel le premier transformateur (5) a par rapport au deuxième transformateur (6) une puissance triple.
